# EUROPÄISCHE PATENTSCHRIFT

(11) **EP 0 983 642 B1**
(45) Veröffentlichungstag und Bekanntmachung des Hinweises auf die Patenterteilung: **23.01.2002**
(21) Anmeldenummer: 98933524.5
(22) Anmeldetag: 12.05.1998
(51) Int. Cl.: H04B 7/005

(54) **VERFAHREN UND VORRICHTUNG ZUR SENDELEISTUNGSREGELUNG FÜR VERBINDUNGEN ZWISCHEN EINER BASISSTATION UND MOBILSTATIONEN EINES FUNK-KOMMUNIKATIONSSYSTEMS**
METHOD AND DEVICE FOR ADJUSTING TRANSMITTER POWER FOR LINKING A BASE STATION AND A MOBILE STATION IN A RADIO COMMUNICATION SYSTEM
PROCEDE ET DISPOSITIF DE REGULATION DE LA PUISSANCE D'EMISSION POUR DES LIAISONS ENTRE UNE STATION DE BASE ET DES STATIONS MOBILES D'UN SYSTEME DE RADIOCOMMUNICATION

(30) Priorität: 22.05.1997 DE 19721503
(43) Veröffentlichungstag der Anmeldung: 08.03.2000
(73) Patentinhaber: SIEMENS AKTIENGESELLSCHAFT, 80333 München (DE)
(72) Erfinder: SLANINA, Peter, A-3441 Judenau (AT)
(86) Internationale Anmeldenummer: DE9801332
(87) Internationale Veröffentlichungsnummer: WO9853558

(56) Entgegenhaltungen:
- EP-A- 0 565 505
- WO-A-95/33313

## Beschreibung

Die Erfindung betrifft ein Verfahren und eine Vorrichtung zur Sendeleistungsregelung für Verbindungen zwischen einer Basis-station und Mobilstationen eines Funk-Kommunikationssystems, beispielsweise eines digitalen Mobilfunknetzes.

Funk-Kommunikationssysteme dienen der Übertragung von Teilnehmersignalen über eine Funkschnittstelle mit Hilfe von hochfrequenten Schwingungen. Solche Funk-Kommunikationssysteme sind beispielsweise Mobilfunknetze oder Einrichtungen zur drahtlosen Teilnehmeranbindung an ein Festnetz. Die Teilnehmersignale verschiedener Teilnehmer, also Mobilstationen, werden über eine gemeinsame Funkschnittstelle übertragen. Man spricht dabei von einem Mehrteilnehmer-Nachrichtenübertragungssystem. Zur Separierung der Teilnehmer, also der unterschiedlichen Verbindungen zwischen Mobilstationen und einer Basisstation, können Zeitmultiplex-, Frequenzmultiplex- oder Codemultiplexverfahren verwendet werden. Es ist ebenso möglich, diese Verfahren zur kombinieren.

Im folgenden wird ein Funk-Kommunikationssystem betrachtet, bei dem gleichzeitig in einem Frequenzkanal eine Übertragung von Informationen zu mehreren Mobilstationen erfolgt. Diese Verbindungen sind also nicht durch ein Zeitmultiplex und nicht durch ein Frequenzmultiplexverfahren separierbar. Die Übertragung von den Mobilstationen zur Basisstation wird als Aufwärtsrichtung und die Übertragung von der Basisstation zu den Mobilstationen als Abwärtsrichtung bezeichnet.

Die Empfangseinrichtungen der Basisstation bzw. der Mobilstationen müssen die gleichzeitig in einem Frequenzkanal übertragenen Informationen mehrerer Verbindungen auswerten. Hierbei tritt das Problem auf, daß bei konstanter Sendeleistung durch die unterschiedlichen Entfernungen zwischen empfangenden und sendenden Funkstationen die Empfangsleistungen der verschiedenen Verbindungen stark variieren. Insbesondere die Empfangseinrichtungen, bei denen die Empfangsleistung ihrer Verbindung klein gegenüber den übrigen Empfangsleistungen ist, konnen eine Datendetektion nur unter großen Schwierigkeiten vornehmen.

Es ist bekannt, zur Überwindung dieses Problems eine Sendeleistungsregelung in Funk-Kommunikationssystemen einzuführen. So ist es beispielsweise aus dem GSM-Mobilfunknetz (Global System for Mobile Communication) bekannt, sowohl in Aufwärtsrichtung, als auch in Abwartsrichtung die Sendeleistung derartig einzustellen, daß in der Empfangeinrichtung eine ausreichende Empfangsleistung fur die jeweilige Verbindung zur Verfugung steht. Beim GSM-Mobilfunknetz werden jedoch in einem Frequenzkanal und zu einem Zeitpunkt nur Informationen einer einzigen Verbindung ubertragen. Insoweit tritt das Problem der gemeinsamen Ausregelung der Sendeleistungen für mehrere Verbindungen nicht auf.

Aus der EP 0 565 505 A2 ist eine Sendeleistungsregelung in einem CDMA-System bekannt, wobei anhand der von der Basisstation empfangenen Signalstärke die Sendeleistung von Signalen von der Mobilstation zur Basisstation und die Sendeleistung der Signale von der Basisstation zu der jeweiligen Mobilstation vergrößert oder verringert wird.

Auch bei CDMA (Code Division Multiple Access) Mobilfunksystemen, beispielsweise nach dem Mobilfunkstandard IS-95, wird eine Sendeleistungsregelung durchgeführt. Hierbei werden die Sendeleistungen der Mobilstationen für die Übertragung in Aufwärtsrichtung derartig eingestellt, daß bei der Empfangseinrichtung der Basisstation für die Informationen aller Verbindungen konstante Empfangsleistungen vorliegen. Dazu findet in der Basisstation eine Bestimmung des Signal/Rauschverhältnisses für jede Verbindung statt. Die Meßergebnisse werden den Mobilstationen signalisiert, worauf diese ihre Sendeleistungen einsiellen.

Die Empfangseinrichtungen der Mobilstationen müssen die Informationen nur für ihre eigene Verbindung auswerten. Aus diesem Grunde sind die Anforderungen an die Güte der Auflösung beim Empfang geringer. Steigt jedoch die Anzahl der Mobilstationen im Funkbereich einer Basisstation, so nimmt auch die Anzahl der Verbindungen zwischen Mobilstationen und der Basisstation zu, so daß die Summe der Einflüsse der übrigen Verbindungen gegenüber der Empfangsleistung der eigenen Verbindung bei der Empfangseinrichtung einer Mobilstation größer wird. Die Mobilstation wird zunehmend empfindlicher gegenüber Empfangsleistungsschwankungen der eigenen Verbindung.

Der Erfindung liegt daher die Aufgabe zugrunde, für Verbindungen von einer Basisstation zu Mobilstationen ein verbessertes Verfahren und eine verbesserte Vorrichtung zur Sendeleistungsregelung anzugeben. Diese Aufgabe wird durch das Verfahren mit den Merkmalen des Patentanspruches 1 und die Vorrichtung mit den Merkmalen des Patentanspruches 13 gelöst. Weiterbildungen der Erfindung sind den Unteransprüchen zu entnehmen.

Erfindungsgemäß wird für das Verfahren zur Sendeleistungsregelung für Verbindungen zwischen Mobilstationen und einer Basisstation eines Funk-Kommunikationssystem ein Dynamikbereich für den entsprechenden Frequenzkanal festgelegt. Weiterhin werden Empfangsleistungen bei zumindest zwei Mobilstationen in Abwärtsrichtung bestimmt. Daraufhin werden für die Basisstation unter Berücksichtigung der bestimmten Empfangsleistungen mobilstationsindividuelle Sendeleistungen bestimmt, wobei die kleinste Sendeleistung zumindest gleich der größten Sendeleistung verringert um den Dynamikbereich ist.

Durch die Sendeleistungsregelung in Abwärtsrichtung wird das Interferenzniveau in der Funkzelle verringert und die allgemeine Übertragungsqualität im Funk-Kommunikationssystem verbessert. Mit der Einstellung der kleinsten Sendeleistung ist die Differenz zwischen der größten und kleinsten Sendeleistung für Verbindungen, die gleichzeitig in einem Frequenzkanal übertragen werden, nie größer als der Dynamikbereich. Selbst wenn der Dynamikbereich sehr groß gewählt wird, beispielsweise die Differenz der größten und kleinsten vorgesehenen Sendeleistungen ausmacht, und somit für die untere Begrenzung der Sendeleistungen kaum ins Gewicht fällt, kann durch Berücksichtigung der Einflüsse der übrigen Verbindungen eine Sendeleistungsregelung in Abwärtsrichtung gewährleistet werden.

Gemäß einer Weiterbildung der Erfindung wird aus den bestimmten Empfangsleistungen die kleinste Empfangsleistung ermittelt und daraus eine korrespondierende größte Sendeleistung in Abwärtsrichtung berechnet. Die größte Sendeleistung garantiert dabei eine ausreichende Übertragungsqualität für diese Verbindung. Damit ist eine leichte Bestimmung der einzelnen Sendeleistungen möglich, wobei außer den Empfangsleistungen auch andere Qualitätskriterien für eine Verbindung (beispielsweise die Bitfehlerrate, die Signallaufzeit, das Interferenzniveau in der Funkzelle usw.) berücksichtigt werden können.

Nach einer weiteren Ausgestaltung der Erfindung erfolgt die gleichzeitige Übertragung von Informationen zu mehreren Mobilstationen in einem durch einen Zeitschlitz gebildeten Zeitkanal des Frequenzkanals, wobei Informationen anhand einer teilnehmerspezifischen Feinstruktur unterscheidbar sind. Die Informationen werden beispielsweise anhand eines teilnehmerspezifischen Codes, mit denen die Informationen gespreizt werden oder anhand von teilnehmerspezifischen Trainingssequenzen, die in die Informationen eingebettet werden, separiert.

Besonders vorteilhaft wird das erfindungsgemäße Verfahren eingesetzt, wenn im Funk-Kommunikationssystem empfangsseitig ein JD (Joint Detection)-CDMA-Verfahren zur Detektion der Information verschiedener Verbindungen zum Einsatz kommt. In diesem Fall werden in der Empfangseinrichtung, beispielsweise in den Mobilstationen, nicht nur die Informationen der eigenen Verbindung ausgewertet, sondern unter Kenntnis der teilnehmerspezifischen Feinstruktur anderer Verbindungen wird deren störender Einfluß auf die Informationen der eigenen Verbindungen verringert. Funk-Kommunikationssysteme mit diesem Detektionsverfahren sind weniger störanfällig, so daß geringe Abweichungen zwischen den Empfangsleistungen verschiedener Verbindungen weniger ins Gewicht fallen. Auch bei kleineren Signal/Rausch-Abstand kann die Datendetektion noch erfolgreich ausgeführt werden. Vorteilhaft ist es weiterhin, wenn der Mobilstation für die JD-CDMA-Detektion auch die Sendeleistungen und/oder Dämpfungen der übrigen Verbindungen von der Basisstation signalisiert werden und diese Angaben bei der Detektion verwertet werden.

Nach einer weiteren Ausgestaltung der Erfindung ist der Dynamikbereich funkzellenabhängig einstellbar. Damit kann den spezifischen Anforderungen einer Funkzelle oder eines Übertragungsverfahrens entsprochen werden. So kann in einem ländlichen Gebiet mit großer Ausdehnung der Funkzelle ein größerer Dynamikbereich festgelegt werden, als in städtischen Gebieten mit verstärkt auftretendem Mehrwegausbreitung und kürzeren Entfernungen zwischen Mobilstationen und der Basisstation.

Weiterhin ist es vorteilhaft, einer Mobilstation eine Dynamikklasse zuzuordnen, die ein oder mehrere Dynamikbereiche bezeichnet. Die Dynamikklassen der Mobilstationen eines Frequenzkanals werden netzseitig gespeichert und ausgewertet. Die Dynamikklasse kann auch aus anderen mobilstationstypischen Angaben, wie z.B. eine Produktnummer oder eine Zulassungsnummer abgeleitet werden. Bei dem für die Sendeleistungsbestimmung zu wählenden Dynamikbereich kann somit für jede Mobilstation ein individueller Wert benutzt werden.

Damit ist es möglich, bei der Festlegung des Dynamikbereiches für eine Funkzelle die Leistungsfähigkeit der Mobilstationen bezüglich ihrer Datendetektion unter Einfluß der übrigen Verbindungen zu berücksichtigen. Je störresistenter eine Mobilstation ist, um so größer kann der Dynamikbereich für die Funkzelle festgelegt werden.

Vorteilhafterweise werden die Mobilstationen mit gleichen oder ähnlichen Dämpfungen einem gemeinsamen Frequenzkanal zugeordnet. So ist möglich, beispielsweise in einem Zeit/Frequenzkanal die Mobilstationen mit einer kleinen Dämpfung zusammenzufassen und in einem anderen Zeitschlitz des Frequenzkanals Mobilstationen mit einer großen Dämpfungbereich. Die Dämpfungen können folglich schon bei der Zuteilung von funktechnischen Ressourcen zu den Mobilstationen berücksichtigt werden.

Die Sendeleistungsregelung wird vorteilhafterweise wiederholt durchgeführt, wobei die Abstände zwischen den Neubestimmungen in etwa zwischen 100 ms und 1 s liegen. Diese Abstände sind abhängig von den Veränderungen der Übertragungsbedingungen zwischen den Mobilstationen und der Basisstation. Ist die Änderungsgeschwindigkeit groß, so muß die Sendeleistungsregelung in kurzen Abständen wiederholt werden. Die Änderungsgeschwindigkeit wird beispielsweise durch die Größe der Änderungen der Empfangspegel dokumentiert.

Nach einer Weiterbildung der Erfindung werden die Empfangsleistungen in den Mobilstationen gemessen und anschließend jeweils in einer Reportmeldung an die Basisstation übermittelt. Die Reportmeldung wird vorteilhafterweise in einem Kontrollkanal übermittelt, der einem Nutzdatenkanal zugeordnet ist. Es handelt sich dabei um einen sogenannten assoziierten Kontrollkanal, der parallel zu einem Nutzdatenkanal zwischen Basisstationen und Mobilstationen unterhalten wird. Vorteilhafterweise werden die Meßwerte für die Empfangsleistungsbestimmungen von der Mobilstation gemittelt, um den Einfluß kurzzeitiger Störungen zu verringern.

Um den Berechnungsaufwand für die Sendeleistungsregelung zu verringern, werden die Sendeleistungen vorteilhafterweise nach diskreten Stufen verringert oder vergrößert. Damit können diskrete Sendeleistungsstufen eingeführt werden, deren Werte netzseitig einfach zu verwalten sind.

Die Erfindung wird im folgenden bezugnehmend auf zeichnerische Darstellungen anhand von Ausführungsbeispielen näher erläutert.

Dabei zeigen
- FIG 1: eine schematische Darstellung eines Mobilfunknetzes,
- FIG 2: eine schematische Darstellung der Verbindung zwischen einer Basisstation und Mobilstationen, sowie den strukturellen Aufbau der Basisstation,
- FIG 3: ein Ablaufdiagramm für die Bestimmung der Sendeleistungen und

### Tabelle 1 eine beispielhafte Zuordnung von Empfangsleistungen zu bestimmten Sendeleistungen.

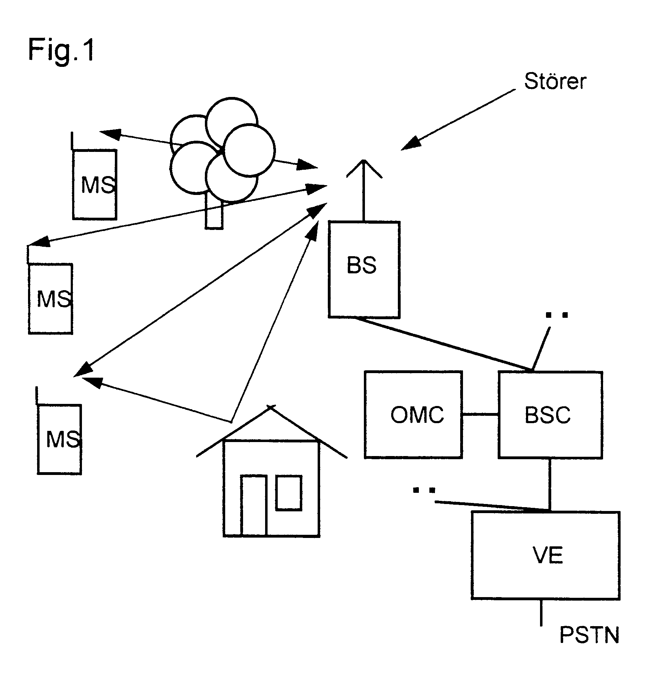

Das durch ein Mobilfunknetz gebildete Funk-Kommunikationssystem nach FIG 1 besteht aus zumindest einer Vermittlungseinrichtung VE, die mit weiteren Vermittlungseinrichtungen vernetzt ist bzw. den Netzübergang zu einem Festnetz PSTN herstellt. Weiterhin ist die dargestellte Vermittlungseinrichtung VE mit zumindest einer Funkteilsteuerung BSC verbunden. Nach FIG 1 ist mit der Funkteilsteuerung BSC eine Basisstation BS verbunden. Zwischen einer Basisstation BS und Mobilstationen MS besteht eine Funkschnittstelle, über die Teilnehmersignale von beispielsweise drei Verbindungen übertragen werden.

Dem Mobilfunknetz ist weiterhin ein Betriebs- und Wartungszentrum OMC zugehörig, das mit einer Vermittlungsstelle VE verbunden ist und zur Überwachung der Leistungsparameter des Mobilfunknetzes sowie zur Wartung und Fehlerkontrolle vorgesehen ist. Es kann ebenso vorgesehen sein, daß für Teilkomponenten des Mobilfunknetzes, beispielsweise ein Basisstationssystem, eigenständige Betriebs- zu Wartungszentren bereitgestellt werden. Im Betriebs- und Wartungszentrum OMC ist es ebenso vorgesehen, Parameter der Luftschnittstelle, beispielsweise die im weiteren geschilderten Dynamikbereiche, zu verwalten.

Für die Funkschnittstelle zwischen der Basisstation BS und den Mobilstationen MS wird ein Frequenzkanal betrachtet, bei dem die Verbindungen weder durch einen Zeitschlitz, wie beim TDMA-Verfahren, noch durch ihre Frequenz, wie beim FDMA-Verfahren, getrennt sind. Die Teilnehmersignale werden also in einem durch eine Frequenz, ggf. zusätzlich durch einen Zeitschlitz, charakterisierten Kanal anhand eines Teilnehmercodes unterschieden. Das im folgenden geschilderte Verfahren ist jedoch auch einsetzbar, wenn eine anderweitige Teilnehmerseparierung erfolgt. Für die Separierung der Teilnehmer durch ihren Teilnehmercode werden auf der Sendeseite, für die Abwärtsrichtung beispielsweise in der Basisstation BS, die Teilnehmersignale mit dem Teilnehmercode moduliert und auf der Empfangsseite anhand der dort vorliegende Teilnehmercodes nach dem JD-CDMA-Verfahren detektiert.

Durch die Bewegung der Mobilstationen MS und ihre unterschiedliche Entfernung zur Basisstation BS treten für die unterschiedlichen Verbindungen Dämpfungen über die Funkschnittstelle auf, die sich stark unterscheiden. Diese Dämpfung entspricht beispielsweise der Spalte 2 von Tabelle 1.

Die Dämpfungen dienen zusätzlich der Zuteilung der Mobilstation MS zu einem bestimmten Zeit/Frequenzkanal.

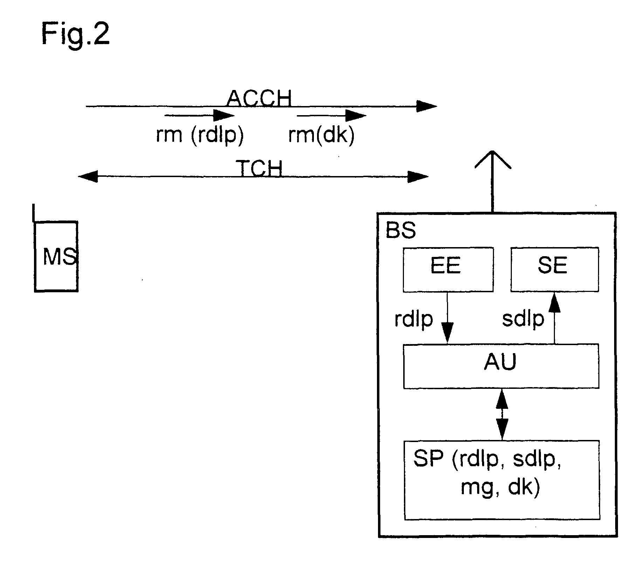

Gemäß FIG 2 signalisiert eine Mobilstation MS während des Verbindungsaufbaus der Basisstation BS Gerätecharakteristika mit einer Reportmeldung rm in einem Kontrollkanal ACCH, beispielsweise auch eine Dynamikklasse dk. Diese Dynamikklasse dk wird netzseitig in der Basisstation BS gespeichert und dient der Bestimmung eines Dynamikbereiches mg für diese Mobilstation MS. Während der Verbindung, für die ein Nutzdatenkanal TCH aufgebaut wurde, bestimmt die Mobilstation MS ständig in Abwärtsrichtung die Empfangsleistung rdlp der Übertragung im Nutzdatenkanal TCH und signalisiert die gemittelten Empfangsleistungen rdlp in bestimmten Abständen der Basisstation BS mit einer weiteren Reportmeldung rm im Kontrollkanal ACCH.

Die Basisstation BS empfängt diese Reportmeldungen rm und wertet sie aus. Die Basisstation BS besteht vereinfacht betrachtet aus einer Empfangseinrichtung EE und einer Sendeeinrichtung SE. Diese Einrichtungen EE, SE nehmen den Empfang und das Senden der Informationen, sowohl Nutzdaten als auch Signalierung, der Verbindung vor.

Darüber hinaus extrahiert die Empfangseinrichtung EE die übertragenen Empfangsleistungen rdlp aus den Reportmeldungen rm und übermittelt sie einer Auswerteeinrichtung AU. Die Auswerteeinrichtung AU ist weiterhin mit einer Speichereinrichtung SP verbunden. In dieser Speichereinrichtung SP werden die übermittelten Empfangsleistungen rdlp der Mobilstationen MS, die Dynamikklassen dk, als auch netzseitig festgelegte Dynamikbereiche mg und, wie im weiteren gezeigt, bestimmte Sendeleistungen sdlp gespeichert.

Die Auswerteeinrichtung AU bestimmt aus diesen Angaben die Sendeleistungen sdlp, die der Sendeeinrichtung SE übermittelt werden, worauf diese mobilstationsindividuell das Senden der Informationen der entsprechenden Verbindungen im Nutzdatenkanal TCH leistungsmäßig einstellt. Ein in der Basisstation BS geformtes Sendesignal enthält in einem Zeit/Frequenzkanal folglich überlagerte Signalanteile mehrerer Verbindungen, die sich im Teilnehmercode, mit dem sie gespreizt wurden, und ggf. in der Sendeleistung sdlp für den Signalanteil unterscheiden.

Die Auswerteeinrichtung AU und die Speichereinrichtung SP können nicht in der Basisstation BS, sondern alternativ in weiteren Einrichtungen des Mobilfunknetzes, beispielsweise in der die Funktionen des Managements der funkttechnischen Ressourcen realisierenden Funkteilsteuerung BSC integriert sein oder eine eigenständige Einheit bilden.

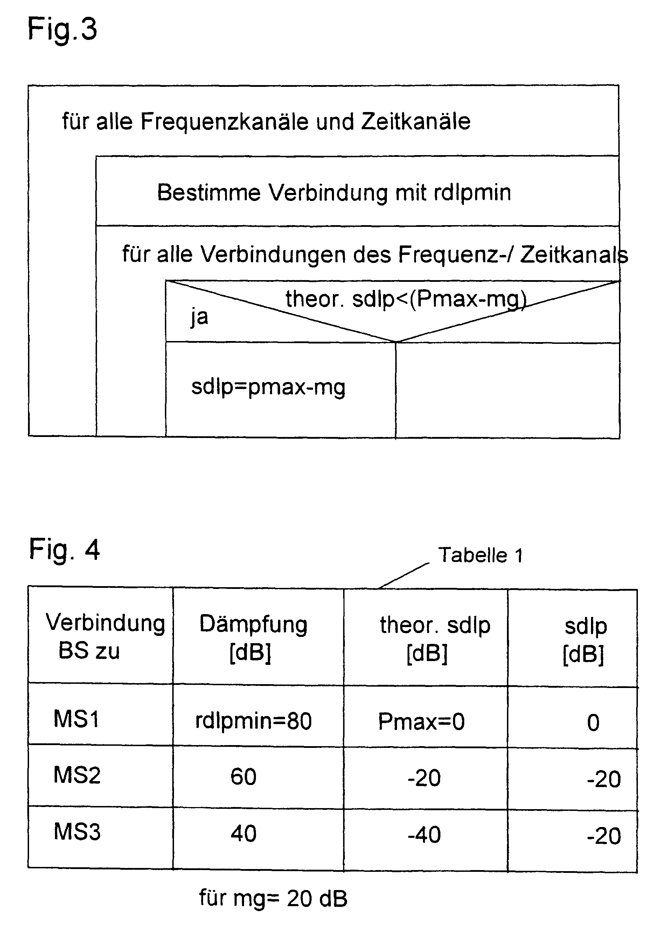

Das Verfahren zur Sendeleistungsregelung wird anhand von FIG 3 näher erläutert. Für alle Frequenzkanäle werden in allen Zeitschlitzen wiederholt die Empfangsleistungen rdlp ausgewertet, die von den Mobilstationen MS in Abständen von 100 ms bis 1 s als gemittelte Meßwerte übertragen werden. Dazu werden die Reportmeldungen rm der Mobilstationen MS verarbeitet, die im assoziierten Kontrollkanal ACCH übertragen werden.

Für jeden Frequenzkanal und jeden Zeitschlitz wird die Verbindung mit der größten Dämpfung, also der kleinsten Empfangsleistung rdlpmin bestimmt. Nach Tabelle 1 ist dies beispielsweise die Verbindung zur Mobilstation MS1, wobei zu dem Dämpfung des Funkkanals zu dieser Mobilstation 80 dB beträgt.

Nachdem aus den Empfangsleistungsmessungen die Dämpfungen zu allen Mobilstationen MS bekannt sind, können die korrespondierenden Sendeleistungen sdlp bestimmt werden. Dabei wird eine zu garantierende Übertragungsqualität berücksichtigt, wobei insbesondere die Verbindung mit der größten Dämpfung betrachtet wird. Für die erste Mobilstation MS1 ergibt sich als Referenz mit 0 dB beispielsweise die größte theoretische Sendeleistung Pmax. Die theoretischen Sendeleistungen sdlp zu den übrigen Mobilstationen betragen entsprechend der Dämpfungen beispielsweise - 20 bzw. - 40 dB.

Für alle Verbindungen dieses Frequenzkanals und Zeitschlitzes werden die theoretischen Sendeleistungen sdlp mit der maximalen Sendeleistung Pmax verringert um den Dynamikbereich mg verglichen. Der Dynamikbereich mg wird für diese Funkzelle (oder für den Frequenzkanal und Zeitschlitz individuell) beispielsweise mit 20 dB angegeben, da die Dynamikbereiche dk der Mobilstationen MS nichts anderes vorsehen. Falls sdlp < Pmax - mg, wird die tatsächlich gewählte Sendeleistung sdlp für diese Verbindung mit sdlp = Pmax - mg festgelegt. Damit wird gewährleistet, daß die Differenz zwischen der maximalen Sendeleistung Pmax und der kleinsten Sendeleistung sdlp niemals größer als der Dynamikbereich mg ist. Somit ergeben sich die Sendeleistungswerte gemäß der letzten Spalte von Tabelle 1.

## Patentansprüche

1. Verfahren zur Sendeleistungsregelung für Verbindungen zwischen einer Basisstation (BS) und Mobilstationen (MS) eines Funk-Kommunikationssystems,
- wobei die Übertragung von den Mobilstationen (MS) zur Basisstation (BS) als Aufwärtsrichtung und die Übertragung von der Basisstation (BS) zu den Mobilstationen (MS) als Abwärtsrichtung bezeichnet wird,
- wobei in der Abwärtsrichtung gleichzeitig in einem Frequenzkanal eine Übertragung von Informationen zu mehreren Mobilstationen (MS) erfolgt, und
- Empfangsleistungen (rdlp) bei zumindest zwei Mobilstationen (MS) in Abwärtsrichtung bestimmt werden,
**dadurch gekennzeichnet, daß**
- ein Dynamikbereich (mg) für den Frequenzkanal festgelegt wird und
- für die Basisstation (BS) unter Berücksichtigung der Empfangsleistungen (rdlp) mobilstationsindividuelle Sendeleistungen (sdlp) bestimmt werden, wobei die kleinste Sendeleistung (sdlp) zumindest gleich der größten Sendeleistung (sdlp) verringert um den Dynamikbereich (mg) ist.

2. Verfahren nach Anspruch 1, bei dem
die kleinste Empfangsleistung (rdlpmin) ermittelt wird und daraus die für eine ausreichende Übertragungsqualität korrespondierende, größte Sendeleistung (Pmax) in Abwärtsrichtung berechnet wird.

3. Verfahren nach einem der vorherigen Ansprüche, bei dem
die gleichzeitige Übertragung von Informationen zu mehreren Mobilstationen (MS) in einem durch einen Zeitschlitz gebildeten Zeitkanal des Frequenzkanals erfolgt, wobei die Informationen anhand von teilnehmerspezifischen Spreizcodes oder von teilnehmerspezifischen Trainingssequenzen unterscheidbar sind.

4. Verfahren nach Anspruch 3, bei dem empfangsseitig ein JD-CDMA Verfahren zur Detektion der Informationen verschiedener Verbindungen zum Einsatz kommt.

5. Verfahren nach einem der vorherigen Ansprüche, bei dem der Dynamikbereich (mg) funkzellenabhängig einstellbar ist.

6. Verfahren nach einem der vorherigen Ansprüche, bei dem einer Mobilstation (MS) eine ein oder mehrere Dynamikbereiche (mg) bezeichnende Dynamikklasse (dk) zugeordnet ist und die Dynamikklassen (dk) eines Frequenzkanals netzseitig gespeichert und ausgewertet werden.

7. Verfahren nach Anspruch 6, bei dem
zu einem Frequenzkanal Mobilstationen (MS) von einer oder ähnlichen Dämpfungen zugeordnet werden.

8. Verfahren nach einem der vorherigen Ansprüche, bei dem die Sendeleistungsregelung wiederholt durchgeführt wird, wobei die Abstände zwischen den Neubestimmungen in etwa zwischen 100 ms und 1 s liegen.

9. Verfahren nach einem der vorherigen Ansprüche, bei dem die Empfangsleistungen (rdlp) in den Mobilstationen (MS) gemessen und anschließend jeweils in einer Reportmeldung (rm) an die Basisstation (BS) übermittelt werden.

10. Verfahren nach Anspruch 9, bei dem
die Reportmeldung (rm) in einem Kontrollkanal (ACCH) übermittelt wird, der einem Nutzdatenkanal (TCH) zugeordnet ist.

11. Verfahren nach Anspruch 9, bei dem
in der Mobilstation (MS) eine Mittelung von Meßwerten für die Empfangsleistungsbestimmung vorgenommen wird.

12. Verfahren nach einem der vorherigen Ansprüche, bei dem die Sendeleistungen (sdlp) nach diskreten Stufen verringert oder vergrößert werden.

13. Vorrichtung zur Durchführung des Verfahrens nach einem der vorherigen Ansprüche,
mit
- einer Speichereinrichtung (SP) zum Speichern eines Dynamikbereichs (mg) von Sendeleistungen und von Empfangsleistungen (rdlp) bei zumindest zwei Mobilstationen (MS), und
- einer Auswerteeinrichtung (AU) zum Bestimmen mobilstationsindividueller Sendeleistungen (sdlp) fur Verbindungen in Abwärtsrichtung zu den zumindest zwei Mobilstationen (MS), wobei die Empfangsleistungen (rdlp) berücksichtigt werden und die kleinste Sendeleistung (sdlp) zumindest gleich der größten Sendeleistung (sdlp) verringert um den Dynamikbereich (mg) ist.

## Claims

1. Method for transmitter power control for connections between a base station (BS) and mobile stations (MS) of a radio communications system,
- the transmission from the mobile stations (MS) to the base station (BS) being designated as the upward direction, and the transmission from the base station (BS) to the mobile stations (MS) being designated as the downward direction,
- transmission of information to a plurality of mobile stations (MS) being performed in the downward direction simultaneously in one frequency channel, and
- receiver powers (rdlp) being determined in the downward direction at at least two mobile stations (MS),
**characterized in that**
- a dynamic range (mg) is fixed for the frequency channel, and
- transmitter powers (sdlp) specific to the mobile station are determined for the base station (BS) taking account of the receiver powers (rdlp), the minimum transmitter power (sdlp) being at least equal to the maximum transmitter power (sdlp) reduced by the dynamic range (mg).

2. Method according to Claim 1, in which the minimum receiver power (rdlpmin) is determined, and the maximum transmitter power (Pmax) corresponding for an adequate transmission performance is calculated therefrom in the downward direction.

3. Method according to one of the preceding claims, in which the simultaneous transmission of information to a plurality of mobile stations (MS) is performed in a time channel, formed by a time slot, of the frequency channel, the information being distinguishable with the aid of subscriber-specific spreading codes or subscriber-specific training sequences.

4. Method according to Claim 3, in which a JD-CDMA method is used at the receiving end to detect the information from different connections.

5. Method according to one of the preceding claims, in which the dynamic range (mg) can be set as a function of radio cell.

6. Method according to one of the preceding claims, in which a mobile station (MS) is assigned a dynamic class (dk) designating one or more dynamic ranges (mg), and the dynamic classes (dk) of a frequency channel are stored and evaluated at the network end.

7. Method according to Claim 6, in which mobile stations (MS) of a single or similar attenuations are assigned to one frequency channel.

8. Method according to one of the preceding claims, in which the transmitter power control is carried out repeatedly, the spacings between the redeterminations being approximately between 100 ms and 1 s.

9. Method according to one of the preceding claims, in which the receiver powers (rdlp) are measured in the mobile stations (MS) and subsequently respectively transferred to the base station (BS) in a report message (rm).

10. Method according to Claim 9, in which the report message (rm) is transferred in a control channel (ACCH) which is assigned to a user data channel (TCH).

11. Method according to Claim 9, in which averaging of measured values for the determination of receiver power is undertaken in the mobile station (MS).

12. Method according to one of the preceding claims, in which the transmitter powers (sdlp) are reduced or increased in discrete steps.

13. Device for carrying out the method according to one of the preceding claims, having
- a storage device (SP) for storing a dynamic range (mg) of transmitter powers and receiver powers (rdlp) at at least two mobile stations (MS), and
- an evaluation device (AU) for determining transmitter powers (sdlp), specific to the mobile station, for connections in the downward direction to the at least two mobile stations (MS), the receiver powers (rdlp) being taken into account, and the minimum transmitter power (sdlp) being at least equal to the maximum transmitter power (sdlp) reduced by the dynamic range (mg).

## Revendications

1. Procédé destiné à réguler la puissance d'émission pour des liaisons entre une station de base (BS) et des postes mobiles (MS) d'un système de communication par radio
- la transmission des postes mobiles (MS) vers la station de base (BS) étant désignée comme sens ascendant et la transmission de la station de base (BS) vers les postes mobiles (MS), comme sens descendant,
- une transmission d'informations vers plusieurs postes mobiles (MS) ayant lieu, dans le sens descendant, simultanément sur un canal de fréquences, et
- des puissances de réception (rdlp) dans le sens descendant étant déterminées pour au moins deux postes mobiles (MS),
**caractérisé par le fait**
- **que**, pour le canal de fréquences, on fixe une plage dynamique (mg) et
- **que**, pour la station de base (BS), on détermine, en tenant compte des puissances de réception (rdlp), des puissances d'émission (sdlp) individuellement pour chaque poste mobile, la puissance d'émission (sdlp) la plus faible étant au moins égale à la puissance d'émission (sdlp) la plus élevée diminuée de la plage dynamique (mg).

2. Procédé selon la revendication 1 au cours duquel
on détermine la puissance de réception la plus faible (rdlpmin) et, à partir de celleci, on calcule la puissance d'émission la plus élevée (Pmax) dans le sens descendant, qui correspond à un qualité de transmission suffisante.

3. Procédé selon l'une des revendications précédentes au cours duquel
a lieu la transmission simultanée d'informations vers plusieurs postes mobiles (MS) sur un canal temporel, formé par une fenêtre de temps, du canal de fréquences, les informations pouvant être distinguées à l'aide de codes d'étalement spécifiques aux utilisateurs ou de séquences d'apprentissage spécifiques aux utilisateurs.

4. Procédé selon la revendication 3 dans lequel
on utilise, du côté réception, un procédé CDMA-JD pour la détection des informations de différentes liaisons.

5. Procédé selon l'une des revendications précédentes dans lequel
on peut régler la plage dynamique (mg) cellule radio par cellule radio.

6. Procédé selon l'une des revendications précédentes au cours duquel
une classe dynamique (dk) désignant une ou plusieurs plages dynamiques (mg) sont affectées à un poste mobile (MS) et les classes dynamiques (dk) d'un canal de fréquences sont mémorisées et analysées côté réseau.

7. Procédé selon la revendication 6 au cours duquel
des postes mobiles (MS) ayant un même affaiblissement ou des affaiblissements similaires sont affectés à un canal de fréquences.

8. Procédé selon l'une des revendications précédentes au cours duquel
on répète la régulation de la puissance d'émission, les intervalles de temps entre les nouvelles déterminations se situant entre 100 ms et 1 s.

9. Procédé selon l'une des revendications précédentes au cours duquel
on mesure les puissances d'émission (rdip) dans les postes mobiles (MS) et, ensuite, on les communique, chacune dans un message-rapport (rm) à la station de base (BS).

10. Procédé selon la revendication 9 au cours duquel
le message-rapport (rm) est transmis sur un canal de contrôle (ACCH), qui est affecté à un canal de données utiles (TCH).

11. Procédé selon la revendication 9 au cours duquel
on calcule, dans le poste mobile (MS), une moyenne des valeurs de mesure pour la détermination de la puissance de réception.

12. Procédé selon l'une des revendications précédentes au cours duquel
on diminue ou on augmente les puissances d'émission (sdlp) suivant des étages discrets.

13. Dispositif destiné à exécuter le procédé selon l'une des revendications précédentes
comportant
- un dispositif de mémorisation (SP) destiné à enregistrer une plage dynamique (mg) de puissances d'émission et de puissances de réception (rdlp) pour au moins deux postes mobiles (MS) et
- un dispositif d'analyse (AU) destiné à déterminer des puissances d'émission (sdlp), individuelles pour chaque poste mobile, pour des liaisons dans le sens descendant vers au moins deux postes mobiles (MS), les puissances de réception (rdlp) étant prises en considération et la puissance d'émission (sdlp) la plus faible étant au moins égale à la puissance d'émission (sdlp) la plus élevée diminuée de la plage dynamique (mg).
